(19) Europäisches Patentamt
European Patent Office
Office européen des brevets

(11) Veröffentlichungsnummer: **0 031 295**
**B1**

(12) # EUROPÄISCHE PATENTSCHRIFT

(45) Veröffentlichungstag der Patentschrift: **18.05.83**

(51) Int. Cl.³: **C 07 F 9/90,** C 08 K 5/59, C 07 F 9/92

(21) Anmeldenummer: **80810336.0**

(22) Anmeldetag: **03.11.80**

(54) **Neue organische Antimon-Schwefel-Verbindungen, ihre Verwendung als Stabilisatoren für chlorhaltige Thermoplaste und die so stabilisierten Thermoplaste.**

(30) Priorität: **08.11.79 CH 10005/79**
**27.06.80 CH 4963/80**

(43) Veröffentlichungstag der Anmeldung: **01.07.81 Patentblatt 81/26**

(45) Bekanntmachung des Hinweises auf die Patenterteilung: **18.05.83 Patentblatt 83/20**

(84) Benannte Vertragsstaaten: **DE FR GB IT NL**

(56) Entgegenhaltungen:
**CH-A-520 465**
**DE-A-1 568 297**
**DE-A-2 454 986**
**US-A-2 226 530**
**US-A-2 684 956**
**Chemical Abstracts Band 81, 23. September 1974 Columbus, Ohio, USA R. ENGLER «Bis(2-mercaptoethyl) sulfide complexes with arsenic, antimony, bis-muth and tin» Seite 606, Abstract Nr. 72036m**

(73) Patentinhaber: **CIBA-GEIGY AG, Patentabteilung Postfach, CH-4002 Basel (CH)**

(72) Erfinder: **Michaelis, Klaus-Peter, Dr., Am Hangweg 8, D-6145 Lindenfels/Odenwald (DE)**
Erfinder: **Wehner, Wolfgang, Dr., Wetzbach 34, D-6144 Zwingenberg (DE)**
Erfinder: **Andreas, Holger, Dr., Mierendorffstrasse 10, D-6142 Bensheim/Auerbach (DE)**
Erfinder: **Müller, Horst, Dr., Reichenberger Strasse 12, D-6149 Fürth/Odenwald (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 031 295 B1

# Neue organische Antimon-Schwefel-Verbindungen, ihre Verwendung als Stabilisatoren für chlorhaltige Thermoplaste und die so stabilisierten Thermoplasten

Die Erfindung betrifft neue organische Antimon-Schwefel-Verbindungen, die als thermische Stabilisatoren für chlorhaltige Thermoplaste, insbesondere für PVC, verwendet werden können.

Die thermische Zersetzung von chlorhaltigen Thermoplasten wie z.B. von Polyvinylchlorid (PVC) stellt ein technisch wichtiges Problem bei der formgebenden Verarbeitung solcher Kunststoffe dar. Eine rationelle Verarbeitung ist praktisch nur durch Zusatz von Stabilisatoren möglich. Hierzu werden vor allem Metallcarboxylate, Organozinnverbindungen und Aminocrotonate verwendet. Vereinzelt hat man auch schon Antimonmercaptide vorgeschlagen, beispielsweise einfache Mercaptide der Formel $Sb(SR)_3$, worin R Alkyl, Aryl oder Aralkyl ist (US 2 684 956) oder Estermercaptide $Sb(SR'COOR'')_3$, worin R' Alkylen, Arylen oder Aralkylen und R'' substituiertes oder unsubstituiertes Alkyl, Aryl oder Arylalkyl bedeutet (US 2 680 726). Ein Vertreter des letzteren Typs ist die unter dem Firmennamen «Irgastab 511» bekannte Verbindung $Sb(SCH_2COO\text{-}isoC_8H_{17})_3$. Ein Nachteil solcher Antimonmercaptide gegenüber Organozinnverbindungen ist ihre geringere Lager- und Lichtstabilität. Es bestand daher ein technisches Interesse an Antimon-Stabilisatoren mit höherer Stabilität bei Lagerung und bei Lichteinwirkung.

Überraschend wurde gefunden, dass bestimmte Antimonmercaptide, deren Sb-Atom nur an 1 oder 2 Mercaptogruppen gebunden ist, gegenüber den bekannten Tris-mercaptiden eine erhöhte Lagerbeständigkeit und eine verbesserte Lichtstabilität besitzen und in ihrer Wirkung als PVC-Stabilisatoren gleich oder überlegen sind. Ausserdem zeichnen sie sich gegenüber den bekannten Tris-mercaptiden dadurch aus, dass durch ihren Zusatz zu chlorhaltigen Polymeren deren thermoplastische Verarbeitung erleichtert wird. Es handelt sich hierbei um neue Verbindungen.

In der DE-A-1 568 297 wurde bereits eine Verbindung geoffenbart, in der das Antimon nur an 2 Mercaptogruppen gebunden ist. Es handelt sich um die Verbindung

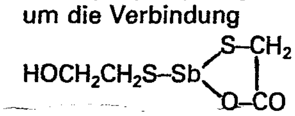

Gleichzeitig wird dort gezeigt, dass diese Verbindung zum Stabilisieren von Suspensions-, Emulsions- und Weich-PVC nicht geeignet ist, da sie bereits beim Einarbeiten eine leichte Gelbfärbung bewirkt, die bei Temperaturbelastung rasch intensiv wird. Demgegenüber zeigen die erfindungsgemässen Antimonverbindungen keine solche Tendenz zum Verfärben der zu stabilisierenden chlorhaltigen Thermoplasten.

Gegenstand der Erfindung sind die Verbindungen der Formel I, II oder III,

$RS\text{–}SbX_2$ I $(RS)_2SbY$ II 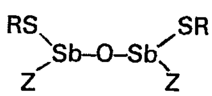 III

worin X Cl, Br, J, OH, $-OR^1$, $-OOCR^2$, $-OOC-R^4-OOCR^3$ oder $-N(R^5)(R^6)$ bedeutet oder die beiden X zusammen eine Gruppe $-O-R^9-O-$ oder $-O-CO-R^9-CO-O-$ bilden,

Y eine der für X gegebenen Bedeutungen hat oder $-NHR^5$, $-NHNH_2$ oder $-NHNH$-Phenyl darstellt,

Z eine der für X gegebenen Bedeutungen hat oder SR ist,

R durch eine oder zwei der Gruppen $-OH$, $-OCOR^7$, $-OR^8$, $-SR^8$ oder $-COOR^8$ substituiertes $C_1$–$C_6$-Alkyl bedeutet,

$R^1$ $C_1$–$C_{18}$-Alkyl, durch $-OR_8$, $-SR^8$ oder $-OCOR^7$ substituiertes $C_1$–$C_6$-Alkyl, $C_6$–$C_{10}$-Aryl, $C_7$–$C_9$-Phenylalkyl oder $C_5$–$C_8$-Cycloalkyl, $R^2$ $C_1$–$C_{18}$-Alkyl, $C_2$–$C_{18}$-Alkenyl, $C_5$–$C_8$-Cycloalkyl, $C_6$–$C_{10}$-Aryl, durch $C_1$–$C_4$-Alkyl, Hydroxyl und/oder Halogen substituiertes Phenyl oder $C_7$–$C_9$-Phenylalkyl, $R^3$ $C_1$–$C_{12}$-Alkyl, Allyl, Cyclohexyl oder Phenyl und $R^4$ $C_2$–$C_{12}$-Alkylen, $C_2$–$C_6$-Alkenylen, $C_5$–$C_{12}$-Cycloalkylen oder Cycloalkenylen, Phenylen oder Halogenphenylen bedeuten, $R^5$ und $R^6$ gleich oder verschieden sind und $C_1$–$C_{12}$-Alkyl, Benzyl oder Cyclohexyl bedeuten, oder $R^5$ und $R^6$ zusammen mit dem N-Atom einen Pyrrolidin-, Piperidin- oder Morpholinrest bilden, $R^7$ $C_1$–$C_{18}$-Alkyl, $CH_3COCH_2$-, Cyclohexyl, Benzyl, $C_6$–$C_{10}$-Aryl oder durch $C_1$–$C_4$-Alkyl, Hydroxyl und/oder Halogen substituiertes Phenyl oder $C_7$–$C_9$-Phenylalkyl, $R^8$ $C_1$–$C_{18}$-Alkyl, Allyl, Cyclohexyl oder Phenyl und $R^9$ $C_2$–$C_6$-Alkylen, durch O, S oder $(R^5)N$ unterbrochenes $C_3$–$C_6$-Alkylen oder durch $-OR^8$ oder $-OCOR^7$ substituiertes Propylen bedeuten, und deren Verwendung als Stabilisatoren für chlorhaltige Thermoplasten. Hierbei stellt der Rest R einen einfach oder zweifach substituierten Alkylrest dar. Im Falle eines zweifach substituierten Alkylrestes können die Substituenten gleich oder verschieden sein. Der Alkylrest selbst kann unverzweigt oder verzweigt sein. Beispiele für den Rest R sind 2-Hydroxyäthyl, 2-Hydroxypropyl, 2,3-Dihydroxypropyl, 2-Hydroxybutyl, 2-Hydroxy-3-butoxypropyl, 2-Octyloxyäthyl, 2-Phenoxypropyl, 2-Acetoxybutyl, 2-(Dodecylmercapto)-äthyl, 2-Hydroxy-3-isopropoxypropyl, 2-Hydroxy-3-caproyloxypropyl, 2-Lauroyloxyäthyl, 2,3-Dibutyroylpropyl, 2,3-Bis-[4-hydroxy-3,5-di-t-butyl-benzoyloxy]-propyl, 2,3-Bis-[2-(4-hydroxy-3,5-di-t-butyl-phenyl)-propionyloxy]-propyl, 2-Benzoyloxybutyl, 2,3-Bis(acetoacetoxy)-propyl oder 2-Acetoxy-3-phenoxypropyl. Bevorzugt ist R ein durch eine oder zwei der Gruppen $-COOR^8$ substituierter Niederalkylrest, wie z.B. Octyloxycarbonylmethyl, Dodecyloxycarbonylmethyl, 2-(Decycloxycarbonyl)-äthyl, 2-(Butyloxycarbonyl)-propyl, 1,3-Bis(octadecyloxycarbonyl)-2-propyl oder 2,3-Bis(2-äthylhexyloxycarbonyl)-propyl. Besonders bevorzugt ist R ein Rest $-CH_2COOR^8$, worin $R^8$ eine $C_8$–$C_{14}$-Alkylgruppe darstellt.

Wenn $R^1$, $R^2$, $R^3$, $R^5$, $R^6$, $R^7$ oder $R^8$ Alkyl ist, so kann dies ein geradkettiger oder verzweigter Alkylrest sein, beispielsweise Methyl, Äthyl, Isopropyl, tert.-Butyl, sec. Amyl, n-Hexyl, 2-Äthylhexyl, n-Decyl oder n-Dodecyl. $R^1$, $R^2$, $R^7$ und $R^8$ als Alkyl können darüber hinaus auch längerkettiges Alkyl sein wie z.B. Tetradecyl, Hexadecyl oder Octadecyl, und sind vorzugsweise $C_8$–$C_{14}$-Alkyl.

$R^1$ als durch $-OR^8$, $-SR^8$ oder $-OCOR^7$ substituiertes Alkyl kann beispielsweise 2-Butoxyäthyl, 3-Octyloxypropyl, 2-Isopropoxypropyl, 2-(Dodecylmercapto)äthyl, 2-(tert.-Butylmercapto)propyl, 2-Acetoxyäthyl, 2-Lauroyloxypropyl oder 3-Stearoyloxyäthyl sein.

$R^1$ oder $R^2$ als Cycloalkyl kann z.B. Cyclopentyl, Cyclohexyl oder Cyclooctyl sein. $R^2$ als Alkenyl kann z.B. Vinyl, Propenyl, Pentadienyl, Hexenyl, Decenyl oder Heptadecenyl sein.

$R^1$, $R^2$ oder $R^7$ als Aryl kann Phenyl oder Naphthyl sein; $R^2$ und $R^7$ können auch durch Niederalkyl, Hydroxyl und/oder Halogen substituiertes Phenyl sein wie z.B. 4-Tolyl, 2-Tolyl, 4-tert.-Butylphenyl, 3-Chlorphenyl, 2,4-Dichlorphenyl, 4-Äthyl-2-chlorphenyl, 3-Hydroxyphenyl, 4-Chlor-2-hydroxyphenyl, 2-Methyl-4-hydroxyphenyl oder 3,5-Di-t-butyl-4-hydroxyphenyl sein.

$R^1$ als Phenylalkyl kann z.B. Benzyl, 2-Phenyläthyl, 1-Phenyläthyl oder 2-Phenylpropyl sein. $R^2$ und $R^7$ als durch Niederalkyl, Hydroxyl und/oder Halogen substituiertes Phenylalkyl können z.B. 4-Butylbenzyl, 3-Chlorbenzyl, 2-Methyl-4-hydroxybenzyl oder 2-(3,5-Di-t-butyl-4-hydroxyphenyl)-äthyl sein.

$R^4$ ist ein zweiwertiger Rest einer Dicarbonsäure und kann z.B. 1,2-Äthylen, 1,2-Propylen, 1,3-Propylen, 1,4-Butylen, 1,2-Octylen, 1,2-Vinylen, 1-Propen-2,3-diyl, Cyclopentan-1,2-diyl, Cyclohexan-1,2-diyl, Cyclooctan-1,2-diyl, 1-Cyclohexan-4,5-diyl, 2-Norbornen-5,6-diyl, 1,2-Phenylen oder 4-Chlor-1,2-phenylen sein.

$R^9$ ist der zweiwertige Rest eines Diols oder einer Dicarbonsäure und kann z.B. 1,2-Äthylen, 1,2-Propylen, 1,3-Propylen, 1,2-Butylen, 1,4-Butylen, 2,2-Dimethyl-1,3-propylen, 3-Oxa-1,3-propylen, 3-Oxa-1,5-pentylen, 3-Methylaza-1,5-pentylen, 3-Phenylaza-1,5-pentylen, 3-Octyloxy-1,2-propylen, 3-Dodecyloxy-1,2-propylen, 2-Stearyloxy-1,3-propylen, 3-Phenyloxy-1,2-propylen, 3-Lauroyloxy-1,2-propylen, 3-Stearyloxy-1,2-propylen, 3-Acetoacetyloxy-1,2-propylen oder 2-Stearoyloxy-1,3-propylen sein.

Bevorzugt sind Verbindungen der Formel I, II oder III, worin X, Y oder Z Chlor ist. Bevorzugt sind weiterhin Verbindungen der Formel I oder II, worin X oder Y eine der Gruppen $-OR^1$, $-OOC-R^4-COOR^3$ oder $-OOCR^2$ darstellt.

Beispiele für Verbindungen der Formel I sind die Verbindungen der folgenden Formeln:

$Cl_2Sb-SCH_2COO\text{-iso-}C_8H_{17}$

$Cl_2Sb-SCH_2CH_2COOC_4H_9$

$Cl_2Sb-SCH_2CH_2OH$

$Cl_2Sb-SCH_2CH_2OOC-C_{11}H_{23}$

$Cl_2Sb-SCH_2CH(OH)CH_2OOC-C_{17}H_{35}$

$(HO)_2Sb-SCH_2CH_2OC_6H_5$

$(C_4H_9O)_2Sb-SCH_2COOC_{12}H_{25}$

$(C_{12}H_{25}O)_2Sb-SCH_2CH_2COOC_{12}H_{25}$

$(C_4H_9OCH_2CH_2O)_2Sb-SCH_2CH_2OOC-C_{11}H_{23}$

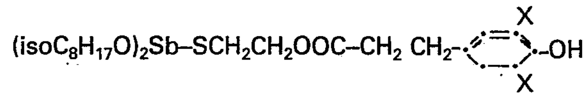

$(isoC_8H_{17}O)_2Sb-S-CH_2-\underset{\substack{|\\ OCOC_{11}H_{23}}}{CH}-CH_2-OisoC_8H_{17}$

$(C_{12}H_{25}O)_2Sb-S-CH_2-\underset{\substack{|\\ OCOCH_2COCH_3}}{CH}-CH_2-OC_6H_5$

$(C_{12}H_{25}O)_2Sb-S-CH_2-\underset{\substack{|\\ OCOCH_2COCH_3}}{CH}-CH_2-OCOCH_2-COCH_3$

$(C_{12}H_{25}SCH_2COO)_2Sb-SCH_2COOCH_3$

$(C_8H_{17}CH{=}CHC_7H_{14}COO)_2Sb-S-CH_2-CH(OH)-CH_2-SC_4H_9$

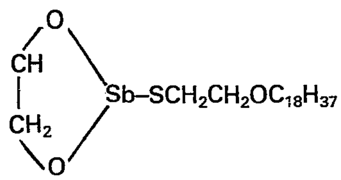

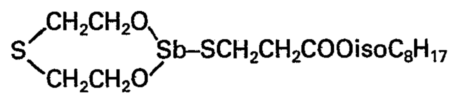

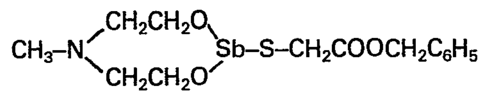

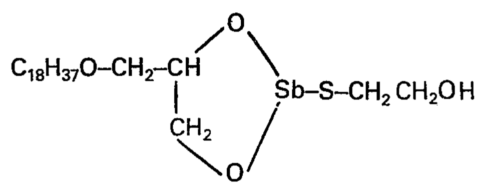

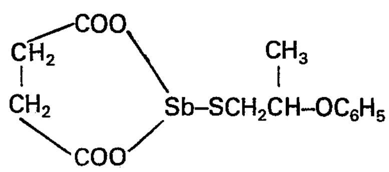

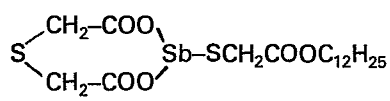

Beispiele für Verbindungen der Formel II sind:

$BrSb(SCH_2CH_2OC_8H_{17})_2$

$ClSb(SCH_2COOC_{12}H_{25})_2$

$ClSb(SCH_2CH(OH)CH_2O\text{-sec-}C_4H_9)_2$

$ClSb(SCH_2\underset{\substack{|\\ OCOCH_2COCH_3}}{CH}CH_2O\text{-iso-}C_8H_{17})_2$

$HO-Sb(SCH_2COOC_{18}H_{37})_2$

$isoC_8H_{17}O-Sb(SCH_2COO\text{-}isoC_8H_{17})_2$

$C_{18}H_{37}O{-}Sb(SCH_2COOC_4H_9)_2$
$C_{12}H_{25}O{-}Sb(SCH_2CH_2COOC_2H_5)_2$
$C_4H_9SCH_2CH_2O{-}Sb(SCH_2CH_2COOC_{12}H_{25})_2$
$C_6H_5CH_2O{-}Sb(SCH_2CH_2OOC{-}C_{17}H_{35})_2$
$C_{11}H_{23}COOCH_2CH_2O{-}Sb(SCH_2CH(OH)CH_2OC_4H_9)_2$
$C_6H_5CH_2COO{-}Sb(SCH_2COOisoC_8H_{17})_2$
$C_{18}H_{37}COO{-}Sb(SCH_2COOCH_3)_2$

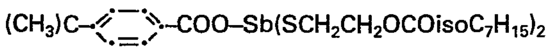

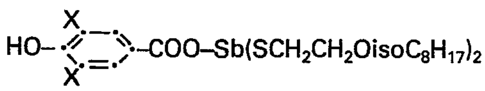

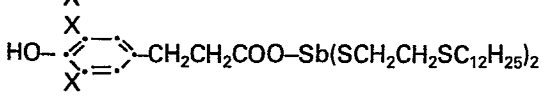

$C_4H_9OOC{-}CH_2CH_2{-}COO{-}Sb(SCH_2CH_2COOC_{18}H_{37})_2$

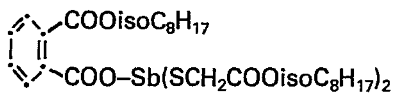

$(C_4H_9)_2N{-}Sb(SCH_2CH_2COOC_4H_q)_2$

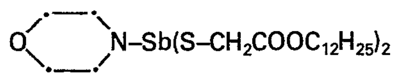

$C_6H_{11}NH{-}Sb(SCH_2CH_2O\text{-}iso\text{-}C_8H_{17})_2$

$C_6H_5NHNH{-}Sb(SCH_2CHCH_2OC_{12}H_{25})_2$

Beispiele für Verbindungen der Formel III sind:

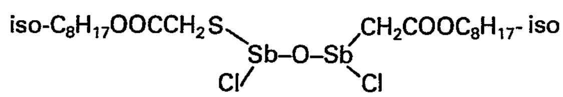

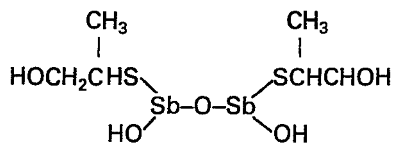

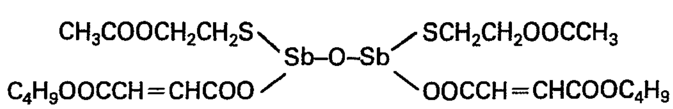

$(C_{12}H_{25}OOCCH_2S)_2Sb{-}O{-}Sb(SCH_2COOC_{12}H_{25})_2$

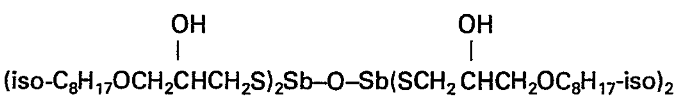

Die Herstellung der Verbindungen der Formel I und II kann in vielen Fällen durch Komproportionierung von Antimon-tris-mercaptiden mit Verbindungen $SbX_3$ oder $SbY_3$ geschehen:

$$Sb(SR)_3 + 2\,SbX_3 \longrightarrow 3\,RS{-}SbX_2 \quad (I)$$
$$2Sb(SR)_3 + SbY_3 \longrightarrow 3(RS)_2SbY \quad (II)$$

Hierfür geeignete Verbindungen $SbX_3$ und $SbY_3$ sind vor allem die Antimonhalogenide $SbCl_3$, $SbBr_3$, $SbJ_3$, Antimonalkoholate wie z.B. $Sb(OC_2H_5)_3$ oder $Sb(OC_6H_{13})_3$, und Antimoncarboxylate, wie z.B. $Sb(OOCCH_3)_3$.

Diese Komproportionierungsreaktionen können ohne oder in einem inerten Lösungsmittel durchgeführt werden. Die erforderlichen Temperaturen liegen bei 100–200 °C. Als Lösungsmittel kommen beispielsweise Toluol, Xylol oder Tetrachloräthan in Frage. Die Tris-mercaptide $Sb(SR)_3$ sind bekannte Verbindungen, wie sie beispielsweise in den eingangs erwähnten US-Patentschriften 2 684 956 und 2 680 726 beschrieben sind.

Die Verbindungen der Formel I und II, in denen X und Y Halogen sind, sind als Zwischenprodukte für die übrigen Verbindungen der Formel I und II verwendbar. Besonders geeignet sind hierfür die entsprechenden Chlorverbindungen V und VI.

$RS{-}SbCl_2$ (V) $(RS)_2SbCl$ (VI)

So entstehen aus V und VI durch Umsetzung mit $R^1OH$ – in Gegenwart oder Abwesenheit von HCl-Akzeptoren – Verbindungen der Formel I und II, worin X oder Y $R^1O{-}$ ist. Verbindungen der Formel I oder II, worin X oder Y $R^2COO{-}$ oder $R^3OOC{-}R^4{-}COO{-}$ ist, entstehen aus den Chlorverbindungen V oder VI durch Umsetzung mit Monocarbonsäuren oder Dicarbonsäurehalbestern, entweder in Gegenwart von äquivalenten Mengen einer Base (bevorzugt eines tertiären Amines) oder durch Umsetzung mit den Alkalisalzen solcher Säuren.

Durch Hydrolyse von Verbindungen der Formel V erhält man Verbindungen der Formel I, worin X OH ist, und Verbindungen der Formel III, worin Z OH ist. Durch Hydrolyse von Verbindungen der Formel VI erhält man Verbindungen der Formel II, worin Y OH ist, und Verbindungen der Formel III, worin Z SR ist.

Die Verbindungen der Formel I oder II, worin X und Y ein Rest $(R^5)(R^6)N{-}$ ist, können aus den Chlorverbindungen V oder VI durch Umsetzung mit sekundären Aminen hergestellt werden, wobei als HCl-Akzeptor entweder dieses Amin im Überschuss oder eine andere Base in äquivalenter Menge eingesetzt werden kann.

Analog erhält man aus Verbindungen der Formel VI durch Umsetzung mit primären Aminin, Hydrazin oder Phenylhydrazin die Verbindungen der Formel II, worin Y $-NHR^5$, $-NHNH_2$ oder –NHNH Phenyl ist.

Die Verbindungen der Formel I, worin beide X zusammen $-O{-}R^9{-}O-$ bilden, können aus den Verbindungen V durch Umsetzung mit einem Äquivalent einer Verbindung HO–$R^9$–OH in Gegenwart von 2 Äquivalenten eines HCl-Akzeptors hergestellt werden. Verbindungen der Formel I, worin beide X zusammen –O–CO–$R^9$–CO–O– bilden, können aus den Verbindungen V durch Umsetzung mit einem Alkalisalz einer Dicarbonsäure der Formel HOOC–$R^9$–COOH hergestellt werden.

Die Verbindungen der Formel V und VI können auch durch Umsetzung von Antimontrichlorid mit den entsprechenden Mercaptoverbindungen RSH hergestellt werden:

$$SbCl_3 + RSH \xrightarrow{-HCl} RS\text{–}SbCl_2 \qquad (V)$$

$$SbCl_3 + 2\,RSH \xrightarrow{-2HCl} (RS)_2SbCl \qquad (VI)$$

Diese Reaktionen werden vorzugsweise in einem organischen Lösungsmittel durchgeführt, beispielsweise in Methylenchlorid. Als HCl-Akzeptor eignen sich organische oder anorganische Basen, insbesondere Alkalicarbonate wie z.B. $NaHCO_3$ oder $K_2CO_3$ in fester Form.

Bei den hier beschriebenen Synthesemethoden können auch Gemische von Verbindungen entstehen. Beispielsweise kann bei der Herstellung einer Verbindung der Formel V durch Komproportionierung als Nebenprodukt auch eine gewisse Menge an VI anfallen. Oder bei der Hydrolyse von Verbindungen der Formel V können neben Produkten der Formel I auch Produkte der Formel III entstehen. Für die meisten Verwendungszwecke können solche Gemische in derselben Weise verwendet werden wie die reinen Verbindungen. Sofern jedoch die reinen Verbindungen gewünscht werden, so können diese durch die üblichen Reinigungsmethoden wie fraktionierte Destillation, Kristallisation oder Chromatographie erhalten werden.

Die erfindungsgemässen Antimonmercaptide der Formeln I, II und III können als Stabilisatoren für chlorhaltige Thermoplaste verwendet werden, wie z.B. für Polymerisate und Copolymerisate von Vinylchlorid oder Vinylidenchlorid, chlorierte Polyolefine, nachchloriertes Polyvinylchlorid, oder chlorierten Kautschuk. Von besonderer Bedeutung ist die Stabilisierung von Polyvinylchlorid (PVC). Hierbei kann es sich um Suspensions-PVC, Emulsions-PVC oder Massepolymerisate handeln.

Der Zusatz der Verbindungen der Formeln I, II und III zu den chlorhaltigen Thermoplasten erfolgt in einer Menge von 0,1 bis 5 Gew.-%, bezogen auf den Thermoplasten. Bevorzugt verwendet man 0,5 bis 3 Gew.-%. Hierbei können auch Gemische von zwei oder mehreren Verbindungen der Formeln I, II und III verwendet werden.

Das Einarbeiten der erfindungsgemässen Stabilisatoren in die polymeren Substrate kann nach den üblichen Verfahren zur Einarbeitung von Additiven in Thermoplaste geschehen, beispielsweise durch Vermischen in Pulverform und anschliessende formgebende Verarbeitung oder durch Zugabe auf einem Walzenstuhl oder in einem Knetwerk. Gleichzeitig können hierbei andere Zusätze eingearbeitet werden wie sie in der Technologie chlorhaltiger Thermoplaste gebräuchlich sind, beispielsweise Gleitmittel, Weichmacher, Füllstoffe, Schlagfest-Zusätze, Pigmente, Lichtstabilisatoren, Antioxydantien oder weitere Thermostabilisatoren, wie z.B. Metallcarboxylate oder organische Phosphite.

Von besonderer Bedeutung ist der Zusatz von Costabilisatoren, insbesondere von Costabilisatoren aus der Reihe der Brenzcatechinderivate. Es ist bekannt, beispielsweise aus den US-Patentschriften 4 029 618 und 4 158 640, dass Brenzcatechin und dessen Derivate eine synergistische Wirkung zusammen mit organischen Antimonoverbindungen als Stabilisatoren für chlorhaltige Thermoplaste besitzen. Man nennt solche Costabilisatoren, die die Wirkung der Grundstabilisatoren synergistisch erhöhen, auch Booster. Eine solche Booster-Wirkung von Brenzcatechin und Brenzcatechinderivaten ist auch in Kombination mit den Verbindungen der Formeln I, II und III festzustellen. Beispiele für solche synergistisch wirkenden Brenzcatechine sind die Verbindungen der folgenden Formeln:

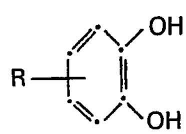

, R = H, Alkyl, Alkenyl, Alkoxycarbonyl

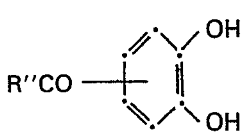

, R'' = Alkyl, Halogenalkyl, Aryl, Aralkyl

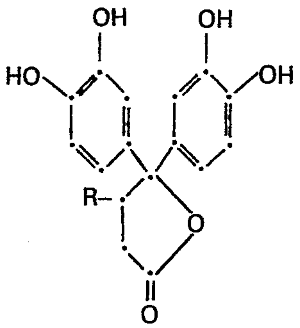
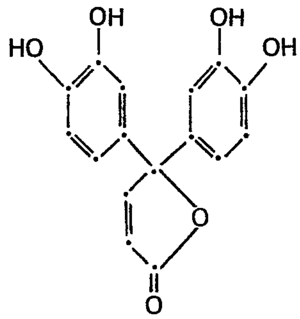
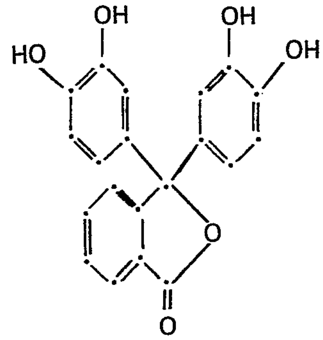

sowie Antimon- und Zinnphenolate solcher Brenzcatechine wie z.B. die folgenden Verbindungen:

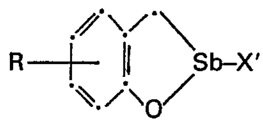 X' = Cl, OH, OR', SR'

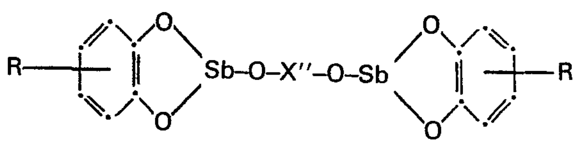

X'' = Alkylen, Oxaalkylen, Thioalkylen, Phenylen

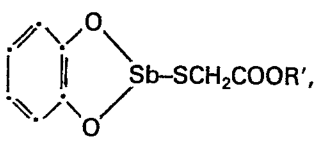, 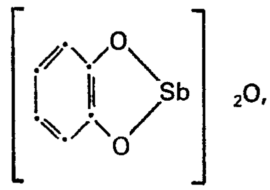

R' = Alkyl, Aryl, Aralkyl

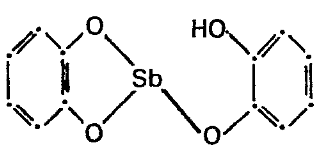, 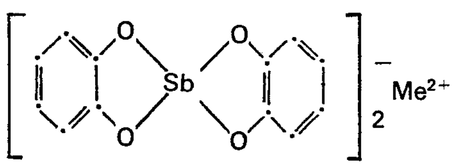

Me = Ca, Zn

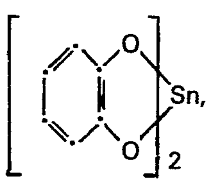 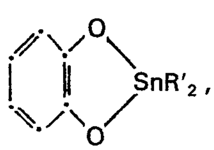 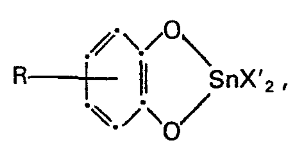 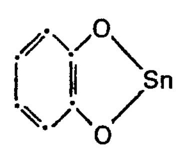

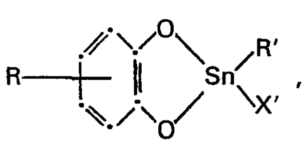, 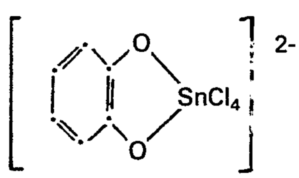 $Me^{2+}$ Me = Ca, Zn

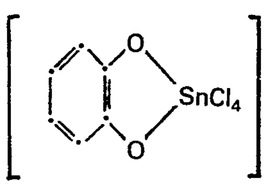 $Y'^{+}_{2}$ Y' = $R_4N$, $R_4P$, $R_3O$, $R_3S$ 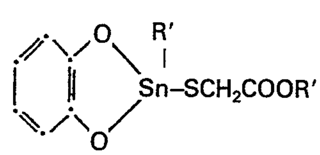 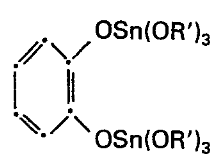

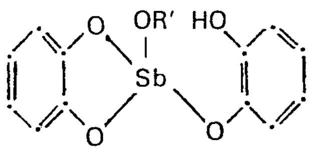,
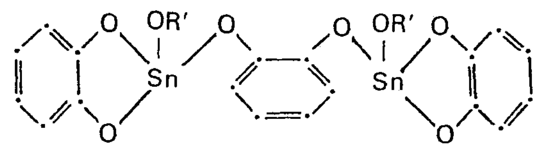

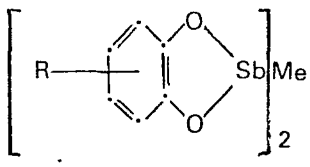
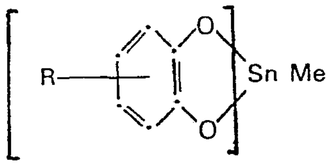

Weitere synergistische Brenzcatechinderivate sind die cyclischen Borate oder Phosphite von Brenzcatechinen, wie z.B. die Verbindungen vom Typ

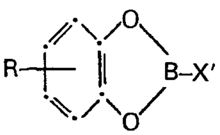 und 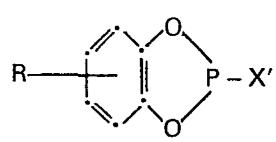

worin

R und X' die vorhin gegebene Bedeutung haben.

Weitere synergistische Brenzcatechinderivate sind die halogenierten Brenzcatechine wie z.B. 3-Chlor-, 3,4-Dibrom-, 3-Brom-4-tert.-butyl-oder 3,4,5,6-Tetrabrom-brenzcatechin.

Diese Costabilisatoren werden in einer Menge von 2–50 Gew.-%, bezogen auf die Menge der verwendeten Verbindung I, II oder III eingesetzt, sodass das Gewichtsverhältnis Stabilisator : Costabilisator 2:1 bis 98:2 beträgt. Das optimale Mengenverhältnis muss für jede Stabilisator-Costabilisator-Kombination experimentell vermittelt werden.

Die erfindungsgemäss stabilisierten chlorhaltigen Thermoplaste können nach den dafür gebräuchlichen Methoden formgebend verarbeitet werden, beispielsweise durch Extrusion, Spritzgiessen, Kalandrieren oder durch Verarbeitung als Plastisole.

Die nachfolgenden Beispiele illustrieren die Herstellung und Verwendung der Verbindungen der Formel I, II und III näher. Darin sind unter Teilen Gewichtsteile zu verstehen, die Temperaturen sind in Celsius-Graden angegeben.

Beispiel 1: Komproportionierung von $SbCl_3$ in Lösung

114,2 g (0,5 Mol) Antimontrichlorid werden mit 731 g (1 Mol) Antimon-tris-thioglycolsäureisooctylester in 200 ml Toluol 20 Stunden unter Rückfluss erwärmt. Nach Abkühlen wird von geringen Verunreinigungen abfiltriert und das Lösungsmittel i.V. entfer.... .Man erhält in nahezu quantitativer Ausbeute ein farbloses viskoses Öl mit den Elementen im Verhältnis Sb:S:Cl = 1:1.924:0.996, mit einem H-NMR-Signal für die Thiomethylenprotonen bei δ = 3.90 ppm.

Das entspricht der Verbindung der Formel

$ClSb(SCH_2COO\text{-}isoC_8H_{17})_2$ (Verbindung Nr. 1).

Dasselbe Ergebnis erhält man bei Ausführung des Versuches in Äthylenchlorid anstelle von Toluol.

In analoger Weise erhält man aus 228.2 g (1 Mol) $SbCl_3$ und 365.4 g (0,5 Mol) $Sb(SCH_2COO\text{-}isoC_8H_{17})_3$ die Verbindung Nr. 2

$$Cl_2SbSCH_2COO\text{-}isoC_8H_{17}$$

als kristallinen Festkörper, der bei 48–49° schmilzt. Das Element-Verhältnis beträgt gemäss Analyse 1:0,92:2.1, das H–NMR-Spektrum zeigt ein Singulett für die Thiomethylenprotonen bei δ = 4.17 ppm.

Beispiel 2: Komproportionierung von $SbCl_3$ ohne Lösungsmittel

45,6 g Antimontrichlorid und 78 g $Sb[SCH_2CH(OH)CH_2O\text{-}iso\text{-}C_8H_{17}]_3$ werden bei Raumtemperatur 12 Std. geschüttelt. Während dieser Zeit verschwindet das anfänglich ungelöste $SbCl_3$. Das resultierende leicht gelbliche Öl stellt das rohe Monomercaptid

$$Cl_2SbSCH_2CH(OH)CH_2O\text{-}isoC_8H_{17}$$

dar (Verbindung Nr. 3).

In analoger Weise erhält man aus 11,4 g $SbCl_3$ und 78 g des obigen Tris-mercaptides die Verbindung Nr. 4.

$$ClSb[SCH_2CH(OH)CH_2O\text{-}isoC_8H_{17}]_2$$

als hellgelbe Flüssigkeit.

Beispiel 3: Alkoholyse von Antimon-chlor-mercaptiden

113 g $ClSb(SCH_2COO\text{-}isoC_8H_{17})_2$ (Verbindung Nr. 1 werden in 200 ml Diäthyläther gelöst. Unter Rühren lässt man eine Lösung von 26 g 2-Äthylhexanol und 20 g Triäthylamin in 100 ml Diäthyläther langsam zutropfen und erwärmt anschliessend 1 Std. unter Rückfluss. Nach dem Erhalten wird das ausgefallene Aminhydrochlorid abfiltriert und die Lösung eingedampft. Man erhält 121 g Produkt der Formel

$$isoC_8H_{17}OSb(SCH_2COO\text{-}isoC_8H_{17})_2$$

(Verbindung Nr. 5) als wasserklare ölige Flüssigkeit, dessen H–NMR-Spektrum in Übereinstimmung mit obiger Formel ist.

Elementaranalyse:

| | | |
|---|---|---|
| gefunden | 18,3% Sb | 9,6% S |
| berechnet | 18,5% Sb | 9,9% S |

In analoger Weise werden aus 113 g $ClSb(SCH_2COO\text{-}isoC_8H_{17})_2$, 54 g Octadecanol (Stearylalkohol) und 20 g Triäthylamin 133 g der Verbindung Nr. 6

$$C_{18}H_{37}OSb(SCH_2COO\text{-}isoC_8H_{17})_2$$

als farbloses Wachs, das bei 48–49° schmilzt, erhalten.

Analyse:

| | | |
|---|---|---|
| gefunden | 15,5% Sb | 8,3% S |
| berechnet | 15,9% Sb | 8,4% S |

In analoger Weise werden aus 99 g $Cl_2Sb\,SCH_2COO\text{-}isoC_8H_{17}$ (Verbindung Nr. 2) 135 g Octadecanol und 51 g Triäthylamin 215 g der Verbindung Nr. 7

$$(C_{18}H_{37}O)_2SbSCH_2COO\text{-}isoC_8H_{17}$$

als farbloses Wachs, das bei 53–54° schmilzt, gewonnen.

Analyse:

| | | |
|---|---|---|
| gefunden | 12,6% Sb | 6,6% S |
| berechnet | 13,0% Sb | 6,9% S |

Beispiel 4: Umsetzung von Antimon-chlor-mercaptiden mit Carbonsäuren

11,2 g $ClSb(SCH_2COO\text{-}isoC_8H_{17})_2$ werden in 20 ml Diäthyläther gelöst. Dazu lässt man unter Rühren gleichzeitig eine Lösung von 2 g Triäthylamin in 10 ml Äther und 4,8 g Endomethylentetrahydrophthalsäure-monobutylester in 20 ml Äther zutropfen und erwärmt anschliessend 1 Std. zum Rückfluss. Das ausgefallene Aminhydrochlorid wird abfiltriert und das Filtrat eingedampft. Man erhält 13,6 g Produkt der Formel

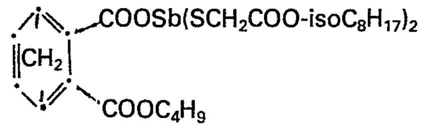

(Verbindung Nr. 8) als farbloses Wachs.

Elementaranalyse:

| | | |
|---|---|---|
| gefunden | 15,8% Sb | 8,2% S |
| berechnet | 16,1% Sb | 8,5% S |

In analoger Weise werden erhalten

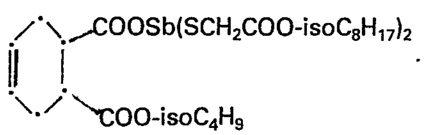

(Verbindung Nr. 9) gelbliches Öl

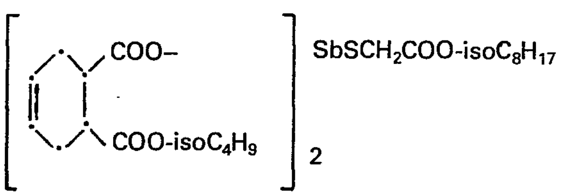

(Verbindung Nr. 10) gelbliches Öl

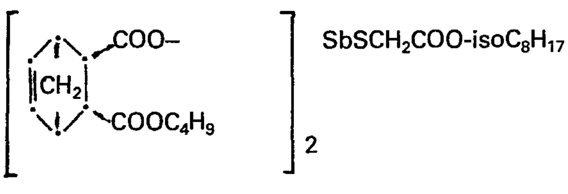

(Verbindung Nr. 11) gelbliches Öl

$$C_{17}H_{35}COOSb(SCH_2COO\text{-}isoC_8H_{17})_2$$

(Verbindung Nr. 12) Wachs, Fp. 47–48°

$$(C_{17}H_{35}COO)_2SbSCH_2COO\text{-}isoC_8H_{17}$$

(Verbindung Nr. 13) Wachs, Fp. 61–63°

$$C_9H_{19}COOSb(SCH_2COO\text{-}isoC_8H_{17})_2$$

(Verbindung Nr. 14) viskoses Öl

aus «Versatic-Säure 10», einem technischen Gemisch verzweigter $C_{10}$-Monocarbonsäuren.

Beispiel 5: Umsetzung von $SbCl_3$ mit Thioglykolestern

Man lässt 4,56 g $SbCl_3$, 4,08 g $HSCH_2COO\text{-}isoC_8H_{17}$ und 1,85 g $NaHCO_3$ in 50 ml Methylenchlorid bei Rückflusstemperatur reagieren. Nach beendeter Gasentwicklung wird das Reaktionsgemisch filtriert und das Filtrat im Vakuum eingedampft. Es hinterbleibt ein farbloses Öl, das hauptsächlich aus der Verbindung Nr. 2 besteht. Das NMR-Spektrum des rohen Produktes zeigt das Vorliegen der Verbindung $C_8H_{17}OOCCH_2S\text{–}Sb(Cl)\text{–}O\text{–}Sb(Cl)\text{—}SCH_2COOC_8H_{17}$ als Nebenprodukt in einer Menge von etwa 10 Mol-%.

Analog erhält man aus 4,56 g $SbCl_3$, 8,16 g Thio-

glykolsäure-iso-octylester und 3,69 g $NaHCO_3$ ein Rohprodukt als farbloses Öl, das hauptsächlich aus der Verbindung Nr. 1 besteht und als Nebenprodukt etwa 10 Mol-% der Verbindung $(C_8H_{17}OOCCH_2S)_2$ Sb–O–$Sb(SCH_2COOC_8H_{17})_2$ enthält.

Beispiel 6: Stabilisierung von PVC

Es wurde die folgende, zur Herstellung von Trinkwasserrohren geeignete Rezeptur verwendet:

| | |
|---|---|
| Suspensions-PVC vom K-Wert 68 | 100 Teile |
| Kreide | 1,0 Teile |
| $TiO_2$ (Rutil) | 1,0 Teile |
| Paraffinwachs | 0,8 Teile |
| Calziumstearat | 0,8 Teile |
| Stabilisator | 0,4 Teile |
| | 104 Teile |

Die Komponenten wurden trocken gemischt und auf einem Labor-Walzwerk bei 200° einem Dauerwalztest unterzogen. Die dabei auftretende Verfärbung wurde durch Bestimmung des Yellowness-Index von entnommenen Proben der 0,3 mm starken Walzfolie nach 3,6 und 12 Minuten bestimmt. Als Vergleich mit dem Stand der Technik wurde «Irgastab 511», ein Antimon-trismercaptoester der Formel $Sb(CH_2COO\text{-}isoC_8H_{17})_3$ verwendet. Die Ergebnisse sind in der folgenden Tabelle zusammengestellt.

| Verwendeter Stabilisator | Yellowness-Index nach | | |
|---|---|---|---|
| | 3 Min. | 6 Min. | 12 Min. |
| Irgastab 511 (Vergleich) | 20,8 | 24,2 | braun |
| Verbindung Nr. 1 | 12,1 | 19,3 | braun |
| Verbindung Nr. 2 | 11,8 | 22,1 | braun |
| Verb. Nr. 1 + 4-tert.-Butyl-brenzcatechin im Verhältnis 19:1 | 7,9 | 16,4 | braun |

Beispiel 7: Stabilisierung von PVC unter Zusatz eines Costabilisators

Es wurde ein Gemisch wie im Beispiel 6 bereitet, anstelle von 0,4 Teilen Stabilisator wurden jedoch 0,35 Teile Stabilisator und 0,05 Teile Tetrabrombrenzcatechin als Costabilisator verwendet.

| Stabilisator | Yellowness-Index nach | | |
|---|---|---|---|
| | 3 Min. | 6 Min. | 12 Min. |
| Verbindung Nr. 6 | 7,8 | 11,2 | braun |
| Nr. 7 | 8,5 | 21,4 | braun |
| Nr. 12 | 7,4 | 11,2 | braun |
| Nr. 13 | 7,7 | 11,7 | braun |
| Nr. 14 | 6,6 | 9,5 | braun |

**Patentansprüche**

1. Verbindungen der Formel I, II oder III

$RS\text{–}SbX_2$ I $(RS)_2SbY$ II 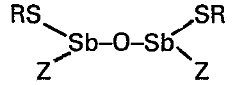 III

worin

X Cl, Br, J, OH, $-OR^1$, $-OOCR^2$, $-OOC-R^4-COOR^3$ oder $-N(R^5)(R^6)$ bedeutet oder die beiden X zusammen eine Gruppe $-O-R^9-O-$ oder $-OCO-R^9-COO-$ bilden,

Y eine der für X gegebenen Bedeutung hat oder $-NHR^5$, $-NHNH_2$ oder –NHNH-Phenyl darstellt,

Z eine der für X gegebenen Bedeutungen hat oder SR ist,

R durch eine oder zwei der Gruppen –OH, $-OCOR^7$, $-OR^8$, $-SR^8$ oder $-COOR^8$ substituiertes $C_1$–$C_6$-Alkyl bedeutet,

$R^1$ $C_1$–$C_{18}$-Alkyl, durch $-OR_8$, $-SR^8$ oder $-OCOR^7$ substituiertes $C_1$–$C_6$-Alkyl, $C_6$–$C_{10}$-Aryl, $C_7$–$C_9$-Phenylalkyl oder $C_5$–$C_8$-Cycloalkyl, $R^2$ $C_1$–$C_{18}$-Alkyl, $C_2$–$C_{18}$-Alkenyl, $C_5$–$C_8$-Cycloalkyl, $C_6$–$C_{10}$-Aryl, durch $C_1$–$C_4$-Alkyl, Hydroxyl und/oder Halogen substituiertes Phenyl oder $C_7$–$C_9$-Phenylalkyl, $R^3$ $C_1$–$C_{12}$-Alkyl, Allyl, Cyclohexyl oder Phenyl und $R^4$ $C_2$–$C_{12}$-Alkylen, $C_2$–$C_6$-Alkenylen, $C_5$–$C_{12}$-Cycloalkylen oder Cycloalkenylen, Phenylen oder Halogenphenylen bedeuten, $R^5$ und $R^6$ gleich oder verschieden sind und $C_1$–$C_{12}$-Alkyl, Benzyl oder Cyclohexyl bedeuten, oder $R^5$ und $R^6$ zusammen mit dem N-Atom einen Pyrrolidin-, Piperidin- oder Morpholinrest bilden, $R^7$ $C_1$–$C_{18}$-Alkyl, $CH_3COCH_2$-, Cyclohexyl, Benzyl, $C_6$–$C_{10}$-Aryl oder durch $C_1$–$C_4$-Alkyl, Hydroxyl und/oder Halogen substituiertes Phenyl oder $C_7$–$C_9$-Phenylalkyl, $R^8$ $C_1$–$C_{18}$-Alkyl, Allyl, Cyclohexyl oder Phenyl und $R^9$ $C_2$–$C_6$-Alkylen, durch O, S oder $(R^5)N$ unterbrochenes $C_3$–$C_6$-Alkylen oder durch $-OR^8$ oder $-OCOR^7$ substituiertes Propylen bedeuten.

2. Verbindungen gemäss Anspruch 1 der Formel I, II oder III, worin X, Y oder Z Chlor ist.

3. Verbindungen gemäss Anspruch 1 der Formel I oder II, worin X oder Y eine der Gruppen $-OR^1$, $-OOC-R^4-COOR^3$ oder $-OOCR^2$ darstellt.

4. Verbindungen gemäss Anspruch 1, worin R ein Rest $-CH_2COOR^8$ ist und $R^8$ eine $C_8$–$C_{14}$-Alkylgruppe darstellt.

5. Verwendung der in Anspruch 1 definierten Verbindungen als Stabilisatoren für chlorhaltige Thermoplasten.

6. Verwendung gemäss Anspruch 5 als Stabilisatoren für Polyvinylchlorid.

7. Verwendung gemäss Anspruch 5 in Kombination mit einem Costabilisator aus der Reihe der Brenzcatechinderivate.

8. Durch ein Antimonmercaptid stabilisierter chlorhaltiger Thermoplast, dadurch gekennzeichnet, dass dieser 0,1 bis 5 Gew.-% einer Verbindung des Anspruches 1 als Stabilisator enthält.

9. Stabilisierter Thermoplast gemäss Anspruch 8, dadurch gekennzeichnet, dass der Thermoplast Polyvinylchlorid ist.

10. Stabilisierter Thermoplast gemäss Anspruch 8, dadurch gekennzeichnet, dass er als Costabilisator Brenzcatechin oder ein Brenzcatechinderivat enthält.

11. Stabilisierter Thermoplast gemäss Anspruch 10, dadurch gekennzeichnet, dass das Gewichtsverhältnis Stabilisator:Costabilisator 2:1 bis 98:2 beträgt.

12. Stabilisierter Thermoplast gemäss Anspruch 8, dadurch gekennzeichnet, dass dieser als Costabilisator ein Calcium- oder Zinkcarboxylat enthält.

**Revendications**

1. Composés répondant à l'une des formules I, II et III:

$RS{-}SbX_2$ I

$(RS)_2SbY$ II

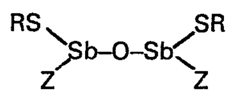 III

dans lesquelles

X représente Cl, Br, I, –OH, $OR^1$, $-OOCR^2$, $-OOC{-}R^4{-}OOCR^3$ ou $-N(R^5)(R^6)$ ou les deux X peuvent former ensemble un radical $-O{-}R^9{-}O-$ ou $-O{-}CO{-}R^9{-}CO{-}O-$,

Y a l'une des significations qui viennent d'être données pour X ou représente $-NHR^5$, $-NHNH_2$ ou –NHNH-Phényl,

Z a l'une des significations qui viennent d'être données pour X ou représente –SR,

R représente un radical alkyle en $C_1$–$C_6$ porteur d'un ou deux des radicaux –OH, $-OCOR^7$, $OR^8$, $-SR^8$ et $-COOR^8$,

$R^1$ représente un alkyle en $C_1$–$C_{18}$, un alkyle en $C_1$–$C_6$ porteur d'un radical $-OR^8$, $-SR^8$ ou $-OCOR^7$, un aryle en $C_6$–$C_{10}$, un phénylalkyle en $C_7$–$C_9$ ou un cycloalkyle en $C_5$–$C_8$, $R^2$ représente un alkyle en $C_1$–$C_{18}$, un alcényle en $C_2$–$C_{18}$, un cycloalkyle en $C_5$–$C_8$, un aryle en $C_6$–$C_{10}$, un phényle ou phénylalkyle en $C_7$–$C_9$ porteur d'un alkyle en $C_1$–$C_4$, d'un hydroxy et/ou d'un halogène, $R^3$ représente un alkyle en $C_1$–$C_{12}$, un allyle, un cyclohexyle ou un phényle, $R^4$ représente un alkylène en $C_2$–$C_{12}$, un alcénylène en $C_2$–$C_6$, un cycloalkylène en $C_5$–$C_{12}$, un cycloalcénylène en $C_5$–$C_{12}$, un phénylène ou un halogénophénylène, $R^5$ et $R^6$ sont identiques ou différents et représentent chacun un alkyle en $C_1$–$C_{12}$, un benzyle ou un cyclohexyle, ou $R_5$ et $R_6$ forment ensemble et avec l'atome d'azote un radical de pyrrolidine, de pipéridine ou de morpholine, $R^7$ représente un alkyle en $C_1$–$C_{18}$, $CH_3COCH_2-$, un cyclohexyle, un benzyle, un aryle en $C_6$–$C_{10}$, ou un radical phénylalkyle en $C_7$–$C_9$ ou phényle porteur d'un alkyle en $C_1$–$C_4$, d'un hydroxy et/ou d'un halogène, $R^8$ représente un alkyle en $C_1$–$C_{18}$, un allyle, un cyclohexyle ou un phényle, et $R^9$ représente un alkylène en $C_2$–$C_6$, un alkylène en $C_3$–$C_6$ interrompu par O, S ou $(R^5)N$ ou un propylène porteur d'un radical $-OR^8$ ou $-OCOR^7$.

2. Composés de formule I, II ou III selon la revendication 1 dans lesquels X, Y ou Z représente le chlore.

3. Composés de formule I ou II selon la revendication 1 dans lesquels X ou Y représente un radical $-OR^1$, $-OOC{-}R^4{-}COOR^3$ ou $-OOCR^2$.

4. Composés selon la revendication 1 dans lesquels R représente un radical $-CH_2COOR^8$ et $R^8$ un radical alkyle contenant de 8 à 14 atomes de carbone.

5. Application des composés définis à la revendication 1 comme stabilisants pour des matières thermoplastiques contenant du chlore.

6. Application selon la revendication 5 comme stabilisants pour le poly-(chlorure de vinyle).

7. Application selon la revendication 5 en association avec un co-stabilisant de la série des dérivés du pyrocatéchol.

8. Matière thermoplastique chlorée stabilisée par un thiolate d'antimoine, caractérisée en ce qu'elle contient, comme stabilisant, de 0,1 à 5% en poids d'un composé selon la revendication 1.

9. Matière thermoplastique stabilisée selon la revendication 8, caractérisée en ce que la matière thermoplastique est le poly-(chlorure de vinyle).

10. Matière thermoplastiquestabilisée selon la revendication 8, caractérisée en ce qu'elle contient, comme co-stabilisant, du pyrocatéchol ou un dérivé du pyrocatéchol.

11. Matière thermoplastique stabilisée selon la revendication 10, caractérisée en ce que le rapport pondéral du stabilisant au co-stabilisant est compris entre 2:1 et 98:2.

12. Matière thermoplastique stabilisée selon la revendication 8, caractérisée en ce qu'elle contient, comme co-stabilisant, un carboxylate de calcium ou de zinc.

**Claims**

1. A compound of the formula I, II or III

$RS{-}SbX_2$ I

$(RS)_2SbY$ II

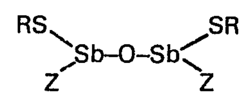 III

wherein

X is Cl, Br, J, OH, $-OR^1$, $-OOCR^2$, $-OOC{-}R^4{-}COOR^3$ or $-N(R^5)(R^6)$, or the two X groups together form a group $-O{-}R^9{-}O-$ or $-OCO{-}R^9{-}COO-$,

Y has one of the meanings given for X, or it is $-NHR^5$, $-NHNH_2$ or –NHNH-phenyl,

Z has one of the meanings given for X, or it is SR,

R is $C_1$–$C_6$-alkyl substituted by one or two of the groups –OH, $-OCOR^7$, $-OR^8$, $-SR^8$ or $-COOR^8$,

$R^1$ is $C_1$–$C_{18}$-alkyl, $C_1$–$C_6$-alkyl substituted by $-OR_8$, $-SR^8$ or $-OCOR^7$, or $R^1$ is $C_6$–$C_{10}$-aryl, $C_7$–$C_9$-phenylalkyl or $C_5$–$C_8$-cycloalkyl, $R^2$ is $C_1$–$C_{18}$-alkyl, $C_2$–$C_{18}$-alkenyl, $C_5$–$C_8$-cycloalkyl, $C_6$–$C_{10}$-aryl, or phenyl or $C_7$–$C_9$-phenylalkyl each substituted by $C_1$–$C_4$-alkyl, hydroxyl and/or halogen, $R^3$ is $C_1$–$C_{12}$-alkyl, allyl, cyclohexyl or phenyl, $R^4$ is $C_2$–$C_{12}$-alkylene, $C_2$–$C_6$-alkenylene, $C_5$–$C_{12}$-cycloalkylene or cycloalkenylene, phenylene or halophenylene, $R^5$ and $R^6$ are identical or different and are each $C_1$–$C_{12}$-alkyl, benzyl or cyclohexyl, or $R^5$ and $R^6$ together with the N atom form a pyrrolidine, piperidine or morpholine group, $R^7$ is $C_1$–$C_{18}$-alkyl, $CH_3COCH_2$-, cyclohexyl, benzyl, $C_6$–$C_{10}$-aryl, or phenyl or $C_7$–$C_9$-phenylalkyl each substituted by $C_1$–$C_4$-alkyl, hydroxyl and/or halogen, $R^8$ is $C_1$–$C_{18}$-alkyl, allyl, cyclohexyl or phenyl, and $R^9$ is $C_2$–$C_6$-alkylene, $C_3$–$C_6$-alkylene interrupted by O, S or $(R^5)N$, or it is propylene substituted by $-OR^8$ or $-OCOR^7$.

2. A compound of the formula I, II or III according to Claim 1, wherein X, Y or Z is chlorine.

3. A compound of the formula I or II according

to Claim 1, wherein X or Y is any one of the groups $-OR^1$, $-OOC-R^4-COOR^3$ or $-OOCR^2$.

4. A compound according to Claim 1, wherein R is a group $-CH_2COOR^8$, and $R^8$ is a $C_8-C_{14}$-alkyl group.

5. Use of a compound defined in Claim 1, as stabiliser for chlorine-containing thermoplasts.

6. Use according to Claim 5 as stabiliser for polyvinyl chloride.

7. Use according to Claim 5 in combination with a co-stabiliser from the pyrocatechol derivative class.

8. A chlorine-containing thermoplast stabilised by an antimony mercaptide, which thermoplast contains 0.1 to 5 per cent by weight of a compound of Claim 1 as stabiliser.

9. A stabilised thermoplast according to Claim 8, which thermoplast is polyvinyl chloride.

10. A stabilised thermoplast according to Claim 8, which thermoplast contains pyrocatechol or a pyrocatechol derivative as a co-stabiliser.

11. A stabilised thermoplast according to Claim 10, wherein the weight ratio of stabiliser to co-stabiliser is 2:1 to 98:2.

12. A stabilised thermoplast according to Claim 8, which thermoplast contains a calcium or zinc carboxylate as a co-stabiliser.